# EUROPÄISCHE PATENTSCHRIFT

(11) **EP 3 511 753 B1**
(45) Veröffentlichungstag und Bekanntmachung des Hinweises auf die Patenterteilung: **10.03.2021**
(21) Anmeldenummer: 18020013.1
(22) Anmeldetag: 11.01.2018
(51) Int. Cl.: G02B 6/44

(54) **SPLEISSMODUL MIT KABELENTLASTUNG**
SPLICE MODULE WITH CABLE RELIEF
MODULE D'ÉPISSURE À LIBÉRATION DE CÂBLE

(43) Veröffentlichungstag der Anmeldung: 17.07.2019
(73) Patentinhaber: ZweiCom-Hauff GmbH, 73494 Rosenberg (DE)
(72) Erfinder: Feltgen, Reinhard, 73489 Jagstzell (DE)
(74) Vertreter: König Szynka Tilmann von Renesse Patentanwälte Partnerschaft mbB

(56) Entgegenhaltungen:
- US-A- 5 402 515
- US-A- 5 655 044
- US-A1- 2007 031 099
- US-A1- 2009 103 879

## Beschreibung

Die Erfindung betrifft ein Spleißmodul für Lichtwellenleiterkabel ("LWL-Kabel"). Solche Lichtwellenleiterkabel sind auch als Glasfaserkabel bekannt.

LWL-Kabel dienen zur Signalübertragung mit hohen Übertragungsraten und/oder hoher räumlicher Reichweite und finden zunehmend Einsatz. Insbesondere werden zunehmend die LWL-Kabelnetze bis zum Verbraucher verlegt oder sogar bis zum Endgerät im Haushalt oder Büro. Mit dem zunehmenden Ausbau der LWL-Kabelnetze stellt sich immer häufiger die Aufgabe der Verbindung von LWL-Kabeln untereinander.

Dabei werden die einzelnen Fasern mit einer an sich bekannten Technologie aneinandergefügt und diese sogenannten Spleiß- und Patchstellen in ebenfalls an sich bekannter Weise geordnet sowie zugänglich und geschützt untergebracht. Man spricht von Spleißmodulen, in denen typischerweise eine Mehrzahl (z. B. zwölf oder eine Vielzahl von zwölf) Glasfasern in Kabeln mit jeweils einer einzelnen Glasfaser in jeweiligen Spleißkassetten gespleißt sind und mit kurzen Anschlussfasern (Pigtails) auf Abschlusselemente (etwa Stecker und Kupplungen) geführt werden. Dort können dann zur Weiterführung der Glasfaserverbindungen LWL-Kabel mit Verbindungselementen (etwa Steckern) eingesetzt werden. Im Folgenden bezieht sich der Begriff des LWL-Kabels also auf einen Kabeltyp im Bereich eines solchen Spleißmoduls und nicht auf ein bspw. unter einer Straße vergrabenes "Glasfaserkabel" mit einem dicken und vielfältigen Bündel einzelner Fasern.

Zur Zugänglichkeit zu den einzelnen Spleiß- und Patchstellen verfügen bekannte Spleißmodule typischerweise über einen bewegten schubladenähnlichen Auszug und eine ortsfeste Halterung. Bei besonderen Varianten ist der Ausdruck nicht translatorisch auszuziehen, sondern um eine Drehachse, typischerweise in der Nähe der Ecke der Halterung, aufschwenkbar. Im Folgenden wird diesbezüglich von einem Drehauszugelement gesprochen (also quasi einer Drehlade anstelle einer Schublade). Beispielhaft kann verwiesen werden auf die EP 2 221 650 A1.

Die translatorischen Schubladenbewegungen führen zu Bewegungen der sogenannten Patchkabel, die an die Verbindungselemente der Anschlussfasern angeschlossen sind. Solche Bewegungen können zu unerwünschten Zugbelastungen oder Biegebelastungen einzelner LWL-Kabel (Patchkabel) führen. Dabei ist insbesondere zu berücksichtigen, dass die LWL-Kabel zur Vermeidung unerwünschter Verluste bestimmte Biegeradien nicht unterschreiten sollen. Dementsprechend sind im Stand der Technik bereits Führungskonstruktionen bekannt, in denen die betroffenen Patchkabel beim translatorischen Ausziehen oder Hineinschieben einer Schublade von Elementen gestützt werden, die typischerweise mit der halben Geschwindigkeit der Schublade, also übersetzt, mitbewegt werden.

Die US 2007/0031099 A1 zeigt ein Spleißmodul nach dem Oberbegriff des Anspruchs 1 mit einer translatorisch bewegbaren Schublade, wobei an der Schublade Elemente zum Führen von LWL-Kabeln und zum Sicherstellen hinreichender Biegeradien vorgesehen sind. Die US 5,655,044 zeigt hingegen ein Spleißmodul mit einem Drehauszugselement. Das gilt auch für die US 5,402,515. Die US 2009/0103879 A1 zeigt wiederum einen Verteilerschrank, in dem ein ganzer Block mit einem Spleißmodulstapel herausschwenkbar unterbracht ist.

Der Erfindung liegt die Aufgabe zugrunde, auf der Basis des Oberbegriffs eine hinsichtlich der mechanischen Belastung der LWL-Kabel verbesserte Lösung für Spleißmodule anzugeben.

Diese Aufgabe wird gelöst durch Anspruch 1 und in verbesserter Ausgestaltung durch die verschiedenen abhängigen Ansprüche. Ferner bezieht sich die Erfindung auch auf einen Modulstapel nach Anspruch 9 und einen Verteilerschrank nach Anspruch 10 mit jeweils einer Mehrzahl solcher Spleißmodule.

Eine Grundidee der Erfindung besteht zunächst in einer Lösung mit einem Drehauszugelement und darüber hinaus in einem Anschlag, der an dem schwenkbaren Teil, also an dem Drehauszugelement, fest vorgesehen oder angebracht ist und damit dessen Bewegungen mitmacht. Dieser Anschlag liegt in Bezug auf eine von einem hier betrachteten Kabel, das von einem Verbindungselement, etwa einem Steckverbindungselement, ausgehend in Richtung zu einer zu der Halterung des Spleißmoduls zumindest im Wesentlichen feststehenden Führung läuft, beschriebene Krümmung innen. Soweit das Kabel im eingefahrenen Zustand, also in der Lagerposition, mehr als eine Krümmung vollzieht, bezieht sich das auf die dem Verbindungselement nächste Krümmung. Eine Veranschaulichung gibt das Ausführungsbeispiel.

Andererseits ist der Anschlag fest an dem schwenkbaren Drehauszugelement vorgesehen und erfordert damit keine komplexe Mechanik zur Realisierung einer eigenständigen Bewegung, wie dies in Bezug auf Stand der Technik zu translatorischen Schubladen erläutert wurde. Die Erfindung ist also sehr einfach zu realisieren und führt zu zuverlässigen und belastbaren Lösungen.

Zusätzlich gibt es ein weiteres Anschlagelement, das hier als Gegenanschlag bezeichnet wird und dementsprechend auf der anderen Seite des betrachteten Kabels und weiter von dem Verbindungselement entfernt vorgesehen ist. Mit diesem Gegenlager, das ebenfalls bezüglich des Drehauszugelements fest liegt, also mit verschwenkt wird, kann beim Aufschwenken desselben in die Zugangsposition eine zu der bisher beschriebenen Biegung gegenläufige Biegung des Kabels erreicht werden, also insgesamt eine Folge von zwei (oder mehr) gegenläufigen Biegungen, gewissermaßen eine S-Form, erreicht werden. Damit lässt sich überschüssige Kabellänge "unterbringen", wenn beim Aufschwenken in die Zugangsposition der Abstand zwischen dem Verbindungselement und einer Führung des Kabels auf seinem Weg von dem Spleißmodul weg verringert wird, was für die betrachteten Spleißmodule typisch ist. Damit soll verhindert werden, dass der entstehende Überschuss an Kabellänge, wenn dieses in der Führung nicht festgelegt ist, sondern rutschen kann, durch die Führung hindurch zu einer Bewegung führt. Solche Bewegungen sind problematisch, weil die Kabel typischerweise an irgendwelchen folgenden Stellen gehalten oder durch Reibung einer Mehrzahl Kabel untereinander stark gebremst sind. Daraus resultierende Zug-, Stauch- oder Biegekräfte sowie eventuell kleine Biegeradien gilt es zu vermeiden.

Auch wenn die erwähnte Führung das betroffene Kabel hinsichtlich solcher Längsbewegungen festlegen sollte, lassen sich durch die beschriebene S-Form mit großzügig und glatt verlaufenden Kurven die vorhandenen Kabellängen unproblematisch unterbringen.

Optional kann, wie das Ausführungsbeispiel veranschaulicht, der Gegenanschlag beim Aufschwenken ferner dafür sorgen, dass das Kabel in Kontakt mit dem zuerst erwähnten Anschlag (auf der anderen Seite des Kabels) bleibt und damit zur anderen Seite ein Winkeltoleranzbereich im Anschluss an das Verbindungselement (im Sinne einer Entfernung weg von dem Anschlag) nicht überschritten wird.

Wenn das Drehauszugelement aus der Lagerposition heraus in die Zugangsposition aufgeschwenkt wird, besteht umgekehrt grundsätzlich die Gefahr, dass das Kabel in der Nähe des Verbindungselements unkontrolliert weggeknickt oder eine unerwünschte Längsverschiebung erfährt und damit im Bereich des Verbindungselements Biegekräfte auftreten oder ein zu kleiner Biegeradius am Kabel auftritt. Der erfindungsgemäße Anschlag kann dies verhindern, indem er den Kabelverlauf anschließend an das Verbindungselement und in Bezug auf die dadurch vorgegebene Richtung im Winkel nach innen beschränkt.

Dabei liegt ferner auch die Überlegung zugrunde, dass das betroffene Kabel an einer weiter vom Verbindungselement entfernten Stelle unbeabsichtigt unter Zug geraten könnte, etwa indem eine Person versehentlich daran zieht oder darauf tritt. Dann könnte sich dieser Zug auf den Ansatz des Kabels am Verbindungselement übertragen und dort zu einer ungewünschten Belastung führen bzw. zu einem zu kleinen Krümmungsradius. Auch gegen diese Gefahr kann der erfindungsgemäße Anschlag schützen.

Natürlich kann das Kabel am Verbindungselement auch, gegebenenfalls zusätzlich, durch Knickschutztüllen geschützt sein und die beschriebenen Funktionen zur Begrenzung des Kabelwinkels dort stellen nur eine optionale Seite der Erfindung dar.

Vorzugsweise ist der Anschlag und ggf. auch der Gegenanschlag in Bezug auf die Ebene des Kabelverlaufs in solcher Weise geformt, dass sich günstige runde Biegungen des Kabels ergeben, also mit einem Krümmungsradius von mindestens 30 mm. Dabei müssen die Formelemente selbst, also der Anschlag und/oder der Gegenanschlag, nicht zwingend genau die gleiche Rundung aufweisen, sondern können auch aus irgendwelchen Gründen geriffelte, polygonale oder sonstwie von einer Rundung abweichende Formen aufweisen. Ein typisches Kabel hat eine gewisse Eigensteifigkeit und legt sich dann um diese Formen herum. Es geht also gewissermaßen um eine einhüllende Form.

Bislang war in Bezug auf den nächsten Bezugspunkt, auf den das Kabel von dem Verbindungselement aus zuläuft, von einer "Führung" die Rede. Es geht hier um eine Einrichtung, die den Kabelverlauf relativ zur Halterung an einer von der Drehachse der Schwenkbewegung des Drehauszugelements entfernten Stelle (vom Verbindungselement aus an der nächsten) in einem gewissen Sinn festlegt. Grundsätzlich kommen hier echte Fixierungen, also z. B. Klemmstellen, durchaus in Betracht; sie sind aber erstens nicht nötig und zweitens bei der Montage oder Wartungsarbeiten unter Umständen mit einem etwas größeren Aufwand verbunden. Es kann im Gegenteil einfach nur eine Führung im Sinn einer räumlichen Einschränkung des Kabelverlaufs durch eine Hülse mit einer deutlich größeren Öffnung als der Kabelquerschnitt, eine Engstelle zwischen zwei Schenkeln einer U-förmigen Halterung oder Ähnliches bevorzugt sein.

Die Engstelle oder Öffnung kann dabei in der Ebene des Kabelverlaufs höchstens das Dreifache, vorzugsweise Doppelte der maximal möglichen Anzahl der einzelnen Kabeldurchmesser betragen. Auch kann diese Führung selbst in einer gewissen Weise beweglich sein, also z. B. mit etwas Spiel montiert oder um eine eigene Drehachse, vorzugsweise in der Führung selbst verlaufend, drehbar sein. Sie soll aber nicht mit der Schwenkbewegung im Sinne derselben Bewegung um dieselbe Schwenkdrehachse mitlaufen. Das heißt konkret, dass vorzugsweise die bei der Schwenkbewegung des Drehauszugelements zurückgelegten Bahnstrecken in der Führung höchstens 10 %, vorzugsweise nur höchstens 8 % oder 6 %, im Vergleich zu der größten auftretenden Bahnstrecke des Verbindungselements des Drehauszugelements betragen und/oder höchstens 30 %, vorzugsweise nur höchstens 20 % oder 10 % des überstrichenen Winkelbereichs.

Der Abstand der Führung von der Drehachse der Schwenkbewegung des Drehauszugelements sollte vorzugsweise mindestens 75% des Abstandes des Verbindungselements (bzw. des drehachsennächsten Verbindungselements) von der Drehachse betragen, wobei die Führung im eingeschwenkten und im ausgeschwenkten Zustand des Drehauszugelements hinsichtlich der Drehachse der Schwenkbewegung eher auf der anderen Seite (relativ zu den Verbindungselementen) liegt. Vorzugsweise sollte dementsprechend der durch eine Verbindungsstrecke zwischen der Führung und der Drehachse einerseits und andererseits eine Verbindungsstrecke zwischen einem jeweiligen Verbindungselement und der Drehachse gebildete Winkel immer größer sein als 90°.

Diese Führung hat den Sinn, das oder die Kabel örtlich in einem gewissen Maß festzulegen, bevor sie zu weiterer Verwendung weiterlaufen, etwa als in dem Spleißmodul angeschlossene Patchkabel. Die bereits zitierte EP 2 221 650 A1 zeigt einen typischen Aufbau.

Der Übersichtlichkeit halber wurde die Erfindung bislang anhand eines LWL-Kabels erklärt, wobei sie grundsätzlich für Spleißmodule mit einer Vielzahl solcher Kabel geeignet und bevorzugt ist. Typischerweise kann eine Reihe von zwölf oder mehr Verbindungselementen und Kabeln in einem Drehauszugelement vorgesehen sein. Dabei sollen die optionalen Aussagen zur Winkelbegrenzung vorzugsweise für mindestens die drei drehachsennächsten Verbindungselemente mit dem entsprechenden Kabel gelten, vorzugsweise für mindestens die vier oder sogar fünf drehachsennächsten. Die Mehrzahl der Verbindungselemente ist dabei im Regelfall in einer linearen Reihe angeordnet und die Verbindungselemente entfernen sich in dieser Reihe zunehmend von der Drehachse. Die Reihe ist vorzugsweise koplanar mit der Ebene des Drehauszugelements und der hier beschriebenen Kabelführung.

Wie in dem Stand der Technik EP 2 221 650 A1 dargestellt, ist eine im Wesentlichen rechteckige Grundflächengeometrie des Drehauszugelements mit Anordnung der Drehachse in der Nähe einer vorderen Ecke bevorzugt und ferner auch eine in der Größenordnung zwischen 60° und 120° betragende Änderung der Kabelverlaufsrichtung von der durch das Verbindungselement vorgegebenen Richtung bis zu der durch die Führung hindurch bei eingeschwenktem Drehauszugelement. Vorzugsweise sind diese beiden Richtungen im Wesentlichen koplanar und auch koplanar mit der Ebene des Drehauszugelements, die wiederum senkrecht zur Drehachse verläuft. Vorzugsweise ist die "Höhe" des Kabeldurchlaufs durch die Führung ungefähr gleich mit der des Verbindungselements dieses Kabels (mit einer bevorzugten Toleranz von ± 20% des Abstandes zwischen dem Verbindungselement und der Führung im eingeschwenkten Zustand).

Der bei der Aus- und Einschwenkbewegung des Drehauszugelements überstreichbare Winkel beträgt vorzugsweise mindestens 90° und zunehmend bevorzugt mindestens 105° und 110°. Obergrenzen können hingegen bei 120°, 115° oder 110° liegen. Dieser Winkelbereich muss einerseits bei der Kabelführung in der hier beschriebenen Weise berücksichtigt werden und es müssen insbesondere die dabei entstehenden Kabellängen problemlos untergebracht werden, andererseits ermöglichen große Ausschwenkwinkel eine gute Zugänglichkeit des Spleißmodulinneren.

Die beschriebene Struktur aus Anschlag und Gegenanschlag kann in einer bevorzugten Ausführung der Erfindung ergänzt werden durch Wände, die zwischen dem Anschlag bzw. Gegenanschlag auf den jeweiligen Seiten des Kabels zwischen sich eine Bahn begrenzen, durch die das Kabel im Übrigen frei läuft. Dazu beträgt die Bahnbreite mindestens das Doppelte eines Kabeldurchmessers. In dieser Weise können vor allem auch eine Mehrzahl Kabel leicht (in der Montage) und gut zugänglich und dabei gleichzeitig flexibel untergebracht werden. Diese Mehrzahl kann sich dann natürlich einen Anschlag und Gegenanschlag teilen.

Insbesondere kann zur Ausbildung des Anschlags, des Gegenanschlags und ggf. auch der Bahn ein Anschlagformelement herangezogen werden, das in solcher Weise symmetrisch aufgebaut ist, dass es sich für einander zwar entsprechende, aber hinsichtlich der Drehachsenlage der Schwenkbewegung (vorne rechts oder vorne links) zueinander spiegelverkehrte Spleißmodule eignet, also z. B. in gleicher Weise spiegelverkehrt montiert werden kann.

Schließlich wird die Erfindung bevorzugt für eine Mehrzahl Spleißmodule ausgeführt, die in serieller Weise als Stapel realisiert sind, insbesondere in Richtung der Drehachse gereiht oder gestapelt (also z. B. horizontal oder vertikal). Vorzugsweise nehmen dabei die einzelnen Spleißmodule (Drehladen) ein ganzzahliges Vielfaches oder einen ganzzahligen Teiler einer in diesem technischen Gebiet üblichen "Höheneinheit" (1,75 Zoll = 4,445 cm) ein. Ferner können die Spleißmodule in solcher Weise gereiht auch in einem an sich bekannten Verteilerschrank untergebracht sein, insbesondere in der beschriebenen Stapelbauform und insbesondere mit einer Mehrzahl Stapel darin. Es kann erneut auf den bereits zitierten Stand der Technik verwiesen werden.

Im Folgenden wird die Erfindung anhand eines Ausführungsbeispiels näher erläutert, dessen Merkmale auch in anderen Kombinationen erfindungswesentlich sein können. Dabei zeigt:
- Fig. 1: einen Ausschnitt aus einem erfindungsgemäßen Spleißmodul in Draufsicht;
- Fig. 2: den Ausschnitt aus Fig. 1, aber mit ausgeschwenktem statt eingeschwenktem Drehauszugelement;
- Fig. 3: ein Formelement als Bestandteil des Spleißmoduls aus den Fig. 1 und 2 in perspektivischer Ansicht;
- Fig. 4: die perspektivische Ansicht der Fig. 3, aber mit weggeschnittenem Oberteil;
- Fig. 5: eine Draufsicht auf das Formelement aus den Fig. 3 und 4 mit weggeschnittenem Oberteil gemäß Fig. 4;
- Fig. 6: eine perspektivische Ansicht der Drehlade des Spleißmoduls aus den Fig. 1 und 2;
- Fig. 7: eine perspektivische Ansicht von drei übereinandergestapelten Drehladen gemäß Fig. 6 und
- Fig. 8: eine Frontansicht eines Verteilerschranks mit einer großen Zahl übereinandergestapelter Spleißmodule gemäß Fig. 7.

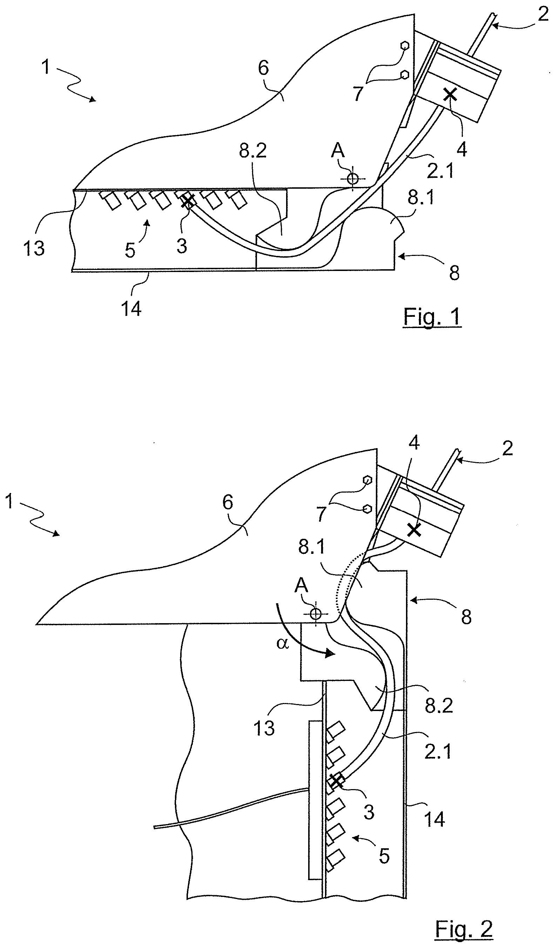

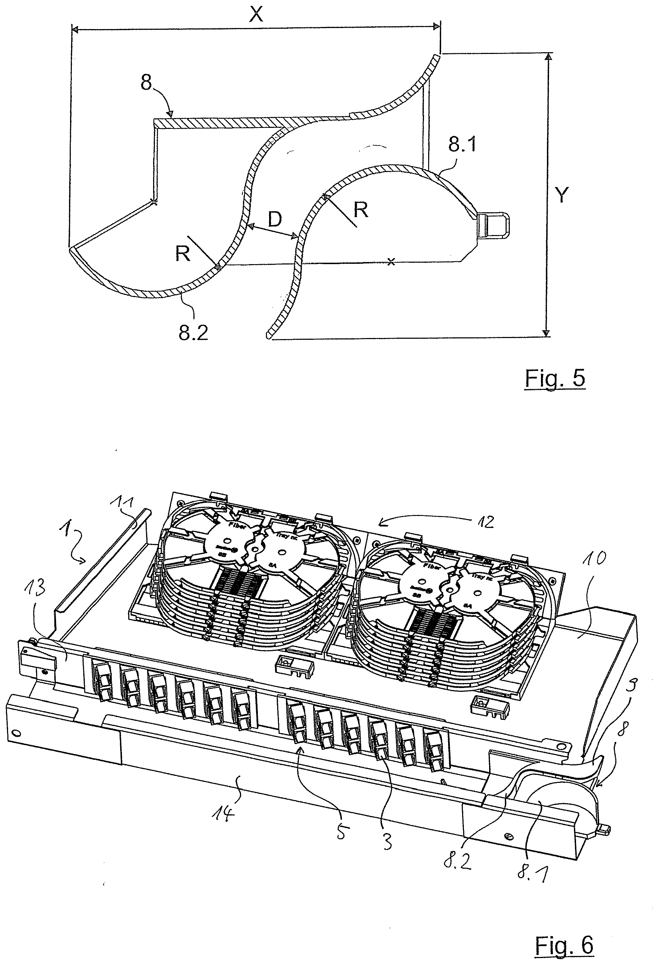

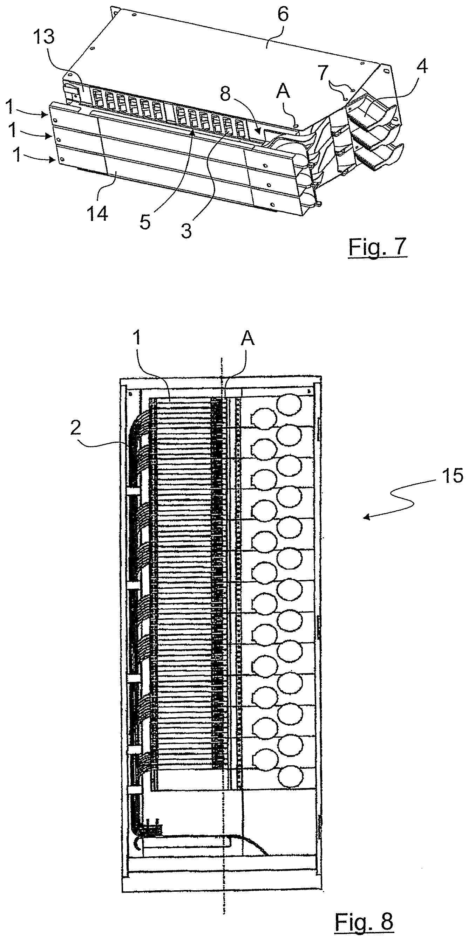

Fig. 1 zeigt in Draufsicht die (im Sinn der Fig. 6 und 7) vordere rechte Ecke eines erfindungsgemäßen Spleißmoduls 1. Darin ist nur ein einziges LWL-Kabel 2 dargestellt, um die Übersicht zu erleichtern. Tatsächlich können in dem Spleißmodul über- und nebeneinander bis zu 24 Kabel 2 gepatched werden, was anhand Fig. 6 anschaulich wird, und Fig. 1 zeigt nur sechs dementsprechende Steckverbindungselemente 3. Diese Verbindungselemente dienen zum Anschluss der hier dargestellten Patchkabel 2.

Ferner zeigt Fig. 1 rechts seitlich eine Führung 4 in der Form eines Kammelements, das anhand Fig. 7 deutlicher zu erkennen ist. Zur Befestigung dienen zwei Schrauben 7, die die Führung 4 an einem Gehäuse 6 festlegen. Das Gehäuse hat insgesamt eine flach-kastenartige Form mit angenähert rechteckigem Grundriss und nimmt ein Drehauszugelement auf, das einerseits die Patcheinheit 5 mit den Verbindungselementen 3 trägt und von dem andererseits eine frontseitige Leiste 14 und eine in Fig. 1 etwas oberhalb (also dahinter) angeordnete Frontplatte 13 dargestellt sind. Die Patcheinheit 5 ist an der Frontplatte 13 angebracht. Ferner erkennt man die in den Fig. 1 und 2 auf der Zeichenebene senkrecht stehende (und in Fig. 8 darin vertikal verlaufende) Drehachse A für die Ausschwenkbewegung, die von dem Zustand in Fig. 1 zu dem in Fig. 2 führt.

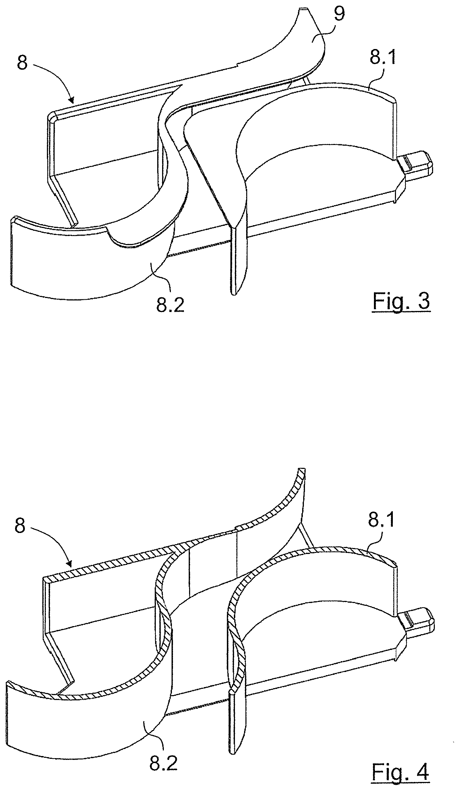

Die erfindungsgemäße Ausrüstung des Spleißmoduls 1 betrifft ein fest am vorderen rechten Eckbereich des Drehauszugelements angebrachtes Formteil 8, in dem für das Kabel 2 ein Anschlag 8.2 und ein Gegenanschlag 8.1 mit jeweils gerundeter Form (bezogen auf die Zeichenebene und damit die Verlaufsebene des Kabels 2) angebracht sind. Dazwischen ist zwischen den Wandbereichen des Formelements 8 ein Kanal geführt, der etwa die vierfache Breite des dargestellten Kabels 2 aufweist, vgl. auch die Fig. 3 bis 5.

In Fig. 1 erkennt man im eingeschwenkten Zustand, dass die durch das mit dem Kreuz markierte Verbindungselement 3 vorgegebene Richtung (etwa 45° nach unten rechts) von dem Kabel allmählich verlassen wird, das Kabel um etwas mehr als 90° umschwenkt und in dieser Orientierung durch die Führung 4 läuft. Dazwischen passiert das Kabel das Formelement 8, den darin ausgebildeten Kanal und liegt insbesondere an dem Anschlag 8.2 und dem Gegenanschlag 8.1 an. Wenn in dieser Situation unbeabsichtigt an dem oberen rechten Ende des Kabels 2 gezogen würde, würde der Anschlag 8.2 zusammen mit einer nicht eingezeichneten Kabelschutztülle eine zu starke Wegbiegung des Kabels 2 von der durch das Verbindungselement 3 vorgegebenen Richtung verhindern.

Im aufgeschwenkten Zustand, hier mit einem Aufschwenkwinkel von 90°, erzwingt der Gegenanschlag 8.1 eine zweite Biegung des Kabels 2, die gegensinnig zu der in Fig. 1 erkennbaren und sich dort an das Verbindungselement 3 anschließenden Biegung ist, sodass insgesamt zwischen dem Verbindungselement 3 und der Führung 4 eine S-Form entsteht. Dies hat den Vorteil, dass die vorhandene Kabellänge ohne wesentliche Längsbewegung oder Belastung des Kabels 2 in der Führung 4 untergebracht werden kann, wenn nämlich der lineare Abstand zwischen dem Verbindungselement 3 und der Führung 4 durch die Aufschwenkbewegung abnimmt. Gleichzeitig ist das Formelement 8 insgesamt, insbesondere im Bereich von Anschlag 8.2 und Gegenanschlag 8.1, so ausgestaltet, dass keine Krümmungsradien des Kabels unter 30 mm auftreten.

Fig. 1 und 2 ist auch zu entnehmen, dass die beiden näher an der Drehachse A liegenden Verbindungselemente 3 und daran angeschlossene (nicht eingezeichnete) Kabel in ganz ähnlicher Weise geführt werden können und dass dies auch für weiter von der Drehachse A entfernte Verbindungselemente 3 und Kabel 2 gilt.

Die Aussagen gelten dabei für einen Drehwinkelbereich α von 0° bis in diesem Fall 110°.

In Fig. 3 ist eine Variante zu dem Anschlagformelement 8 aus den Fig. 1 und 2 dargestellt, und zwar mit einer oberseitigen Abdeckung 9. Diese dient zum Sichern von innerhalb des Anschlagformelements 8 laufenden Kabeln 2 gegen versehentliches Herausrutschen. Die Abdeckung 9, die auch fingerförmig sein kann, enthält einen relativ zu dem Kanal für die Kabel darunter schmalen Schlitz, durch den einzelne Kabel hinein und heraus geführt werden können. Dieser Schlitz verhindert aber wegen seiner reduzierten Breite und seiner von der Mittellinie des Kanals abweichenden (und gegenläufig zu der Ideallinie eines gestrafften Kabels geformten) Gestalt ein selbsttätiges Herausrutschen von Kabeln 2.

Fig. 4 zeigt eine analoge Darstellung zu Fig. 3, aber mit entlang einer horizontalen Ebene und etwas unterhalb der Abdeckung 9 aufgeschnittenem Anschlagformelement 8. Die dargestellte Form des Kanals entspricht im Wesentlichen den Fig. 1 und 2.

Fig. 5 zeigt eine Draufsicht auf die Struktur aus Fig. 4 mit einigen Maßangaben. Die eingezeichneten Radien R von Anschlag 8.2 und Gegenanschlag 8.1 betragen mindestens 30 mm und die Kanalbreite D beträgt bei diesem Beispiel 15 mm. Eine typische Kabelstärke liegt bei bis zu 2,4 mm. Eine typische Länge X beträgt 110 mm und eine typische Tiefe Y 85 mm. Die Höhe des Kanals senkrecht zur Zeichenebene liegt bei 20 mm.

Fig. 6 zeigt eine geöffnete Drehlade eines Spleißmoduls 1 mit einer Kassettenträgerplatte 10 als Basis und Seitenwänden 11 aus gebogenem Stahlblech. Daran sind Aufnahmen 12 für vertikal übereinander angeordnete Spleißkassetten zur Aufnahme der Spleißverbindungen und der Überlängen der Glasfasern dargestellt. Eine bereits in den Fig. 1 und 2 eingezeichnete Patcheinheit 5 ist an einer Frontplatte 13 angebracht und enthält die bereits erwähnten Steckverbindungen 3. Zusätzlich zu der Frontplatte 13 trägt die Kassettenträgerplatte 10 noch eine weiter vorn angeordnete Abdeckplatte 14 als Blende, wobei im rechten Teil zwischen der Abdeckplatte 14 und der Frontplatte 13 das Anschlagformelement 8 vorgesehen ist. Fig. 6 zeigt erneut die Drehachse A (vgl. Fig. 1 und 2) im rechten vorderen Bereich.

Die Aufnahmen 12 können zwei Kassettenstapel à sechs Kassetten à zwei Spleißstellen aufnehmen. Diese sind den 24 Steckverbindungselementen 3 zugeordnet.

Fig. 7 zeigt einen Stapel aus drei solchen Spleißmodulen 1 gemäß Fig. 6 übereinander und zusätzlich neben dem Gehäuse 6 die seitliche Führung 4, auf die bereits in Bezug auf die Fig. 1 und 2 eingegangen wurde und die eine kammartige Struktur hat. Dabei ergibt sich in Verbindung mit darüber und darunter liegenden weiteren Stapeln bzw. Wänden des Schrankes (vgl. Fig. 8) für jedes Spleißmodul 1 eine Durchgangsöffnung zwischen den "Kammzinken" der Führung 4. Die Führung 4 ist relativ zu dem Gehäuse ortsfest, nimmt also an den Schwenkbewegungen nicht teil, weder translatorisch noch rotatorisch.

Fig. 8 zeigt eine Frontansicht eines kompletten LWL-Kabel-Verteilerschranks 15 mit einer größeren Zahl dreier Stapel gemäß Fig. 7 übereinander, vgl. das Bezugszeichen 1. Man erkennt deutlich, wie die Kabel 2 zunächst von unten am linken Rand des Schrankes 15 hinaufgeführt werden, nachdem sie im unteren Bereich in den Schrank 15 eingetreten sind, und von diesem linken Strang aus jeweils in die zugehörigen Spleißmodule 1 nach rechts abzweigen. Man erkennt anhand des Bezugszeichens A ferner die vertikal durchlaufende Drehachse. Etwas rechts davon ist die Struktur der Führungen angeordnet, auf die weiter rechts rund eingezeichnete Stützelemente für weitergeführte Patchkabel 2 folgen. Der Schrank 15 ist in üblicher Weise von der Frontseite durch eine Türe zugänglich und die einzelnen Spleißkassetten können durch Aufschwenken der Spleißmodule 1 erreicht werden.

## Patentansprüche

1. Spleißmodul mit einem Auszugelement (1), das relativ zu einer Halterung (6) des Spleißmoduls zwischen einer Lagerposition des Auszugelements (1) und einer Zugangsposition des Auszugelements (1) bewegt werden kann, und
mit einer Reihe von Verbindungselementen (3), von denen aus LWL-Kabel (2) jeweils mit einer relativ zu dem Auszugelement (1) vorgegebenen Richtung herauslaufen und zu einer den Verlauf der LWL-Kabel (2) räumlich begrenzenden Führung (4) laufen,
wobei das jeweilige LWL-Kabel (2) in der Lagerposition des Auszugelements (1) aus dem zugehörigen Verbindungselement (3) in Richtung zu der Führung (4) mit einer auf das Verbindungselement (3) folgenden ersten Biegung läuft und bezüglich dieser Biegung innen ein Anschlag (8.2) an dem Auszugelement (1) vorgesehen ist,
und ferner an dem Auszugelement (1) ein Gegenanschlag (8.1) vorgesehen ist,
**dadurch gekennzeichnet, dass** das Auszugelement (1) ein Drehauszugelement (1) ist, dass seine Beweglichkeit zwischen der Lagerposition und der Zugangsposition eine Verschwenkbarkeit ist
und dass der Gegenanschlag (8.1) beim Aufschwenken des Drehauszugelements (1) in die Zugangsposition eine zweite und zu der ersten Biegung gegensinnige Biegung des LWL-Kabels (2) unterstützt oder erzwingt, welche zweite Biegung zwischen der ersten Biegung und der Führung (4) angeordnet ist und zur Unterbringung von überschüssiger Kabellänge infolge eines beim Aufschwenken abnehmenden Abstandes zwischen dem Verbindungselement (3) und der Führung (4) ausgelegt ist.

2. Spleißmodul nach Anspruch 1, bei dem der Anschlag (8.2) und vorzugsweise auch der Gegenanschlag (8.1) in solcher Weise gerundete Oberflächen aufweisen, dass sich bei Anlage des LWL-Kabels (2) daran keine Kabelkrümmungsradien unter 30 mm ergeben.

3. Spleißmodul nach einem der vorstehenden Ansprüche, bei dem die Führung (4) das LWL-Kabel (2) quer zu seiner Längsrichtung örtlich beschränkt, vorzugsweise auf höchstens das Dreifache des summierten Kabeldurchmessers aller durchgeführten LWL-Kabel (2), dabei aber das LWL-Kabel (2) nicht fixiert.

4. Spleißmodul nach einem der vorstehenden Ansprüche, bei dem die Führung (4) bei Verschwenkbewegungen des Drehauszugelements (1) relativ zu der Halterung (6) ortsfest ist oder höchstens 10% der Bahnstrecke des Verbindungselements (3) zurücklegt.

5. Spleißmodul nach einem der vorstehenden Ansprüche, bei dem die Reihe der Verbindungselemente (3) mindestens zwölf Verbindungselemente (3) umfasst und bei dem für mindestens die drei der Drehachse (A) der Schwenkbewegung nächsten Verbindungselemente (3) und die zugehörigen LWL-Kabel (2) ein weiter nach innen Biegen des LWL-Kabels (2) auf mehr als 15° verhindert wird, wenn das Drehauszugelement (1) in die Zugangsposition geschwenkt wird.

6. Spleißmodul nach einem der vorstehenden Ansprüche, bei dem das Drehauszugelement (1) um mindestens 90° und höchstens 120° aufschwenkbar ist.

7. Spleißmodul nach einem der vorstehenden Ansprüche, bei dem an dem Drehauszugelement (1) eine Führungsbahn für das oder die LWL-Kabel (2) zwischen zwei Wänden definiert ist, von denen eine in den Anschlag (8.2) und eine auf der entgegengesetzten Seite des LWL-Kabels (2) liegende in den Gegenanschlag (8.1) übergeht.

8. Spleißmodul nach einem der vorstehenden Ansprüche, mit einem Anschlagformelement (8), das den Anschlag (8.2) und den Gegenanschlag (8.1) aufweist, vorzugsweise zusätzlich die Bahn begrenzende Wände nach Anspruch 7 aufweist, und in solcher Weise symmetrisch aufgebaut ist, dass es sowohl für Spleißmodule mit an einem rechten Ende einer Vorderkante des Drehauszugelements (1) angeordneter Drehachse (A) als auch für Spleißmodule mit an einem linken Ende dieser Vorderkante angeordneter Drehachse einsetzbar ist.

9. Spleißmodulstapel mit einer Mehrzahl Spleißmodule nach einem der vorstehenden Ansprüche, deren Drehachsen geometrisch übereinstimmen und die in dieser Richtung gereiht oder gestapelt sind.

10. Verteilerschrank mit einer Mehrzahl Spleißmodule nach einem der Ansprüche 1 bis 8, deren Drehachsen geometrisch übereinstimmen und die in dieser Richtung gereiht oder gestapelt sind, vorzugsweise mit einer Mehrzahl Stapel nach Anspruch 9.

## Claims

1. A splice module with an extractable element (1) that can be moved relative to a holder (6) of the splice module between a storage position of the extractable element (1) and an access position of the extractable element (1), and
having a series of connecting elements (3) from which fibre-optic cables (2) emanate, each with a predetermined direction relative to the extractable element (1), and run to a guide (4) spatially delimiting the routing of fibre-optic cables (2),
wherein each fibre-optic cable (2), in the storage position of the extractable element (1), runs from its associated connecting element (3) towards the guide (4) with a first bend following the connecting element (3) and wherein a stop (8.2) is provided at the extractable element (1) on the inner side with regard to this bend,
and wherein furthermore, a counterstop (8.1) is provided at the extractable element (1),
**characterised in that** the extractable element (1) is a rotary extractable element (1), that its movement between the storage position and the access position is pivotable,
and that the counterstop (8.1) supports or exacts, when the rotary extractable element (1) is pivoted open into the access position, a second bend of the fibre-optic cable (2) opposite to the first bend, which second bend is arranged between the first bend and the guide (4) and which is adapted to accommodate excess cable length due to a decreasing distance between the connecting element (3) and the guide (4) when pivoting open.

2. The splice module according to claim 1, in which the stop (8.2) and preferably also the counterstop (8.1) have surfaces rounded such that when the fibre-optic cable (2) rests thereon, there are no cable curvature radii below 30 mm.

3. The splice module according to one of the preceding claims, wherein the guide (4) locally restricts the fibre-optic cable (2) transversely to its longitudinal direction, preferably to a maximum of triple the summation of the cable diameters of all the guided fibre-optic cables (2), wherein the fibre-optic cable (2) is not fixed, however.

4. The splice module according to one of the preceding claims, wherein the guide (4) is locally stationary or covers a maximum of 10% of the path of the connecting element (3), during pivoting movements of the rotary extractable element (1) relative to the holder (6).

5. The splice module according to one of the preceding claims, wherein the series of connecting elements (3) comprises at least twelve connecting elements (3) and wherein for at least the three connecting elements (3) closest to the axis of rotation (A) of the pivoting movement and for the associated fibre-optic cables (2) a further inward bending of the fibre-optic cable (2) to more than 15° is prevented when the rotary extractable element (1) is pivoted into the access position.

6. The splice module according to one of the preceding claims, wherein the rotary extractable element (1) can be pivoted open by at least 90° and to a maximum of 120°.

7. The splice module according to one of the preceding claims, wherein the guide path at the rotary extractable element (1) for the fibre-optic cable(s) (2) is defined between two walls, whereof one merges into the stop (8.2) and one on the opposite side of the fibre-optic cable (2) into the counterstop (8.1).

8. The splice module according to one of the preceding claims, with a formed stop element (8), which comprises the stop (8.2) and the counterstop (8.1), preferably comprises additionally the path-delimiting walls according to claim 7, and is constructed in such a way symmetrically that it can be used both for splice modules with an axis of rotation (A) arranged at a right end of a front edge of the extractable element (1) and for splice modules with an axis of rotation arranged at a left end of this front edge.

9. A splice module stack with a plurality of splice modules according to one of the preceding claims, whose axes of rotation correspond geometrically, and which are lined up or stacked in this direction.

10. A distribution cabinet with a plurality of splice modules according to one of claims 1-8, whose axes of rotation correspond geometrically and are lined up or stacked in this direction, preferably with a plurality of stacks according to claim 9.

## Revendications

1. Module d'épissurage comprenant un élément extractible (1) mobile par rapport à un support (6) du module d'épissurage entre une position installée de l'élément extractible (1) et une position d'accès de l'élément extractible (1), et
comprenant une rangée d'éléments de connexion (3) à partir desquels partent des câbles à fibres optiques (2) selon une direction prédéfinie par rapport à l'élément extractible (1) en direction d'un organe de guidage (4) délimitant spatialement le cheminement des câbles à fibres optiques (2);
dans lequel le câble à fibres optiques (2) respectif, dans la position installée de l'élément extractible (1), part de l'élément de connexion (3) associé, en direction de l'organe de guidage (4), selon une première courbure faisant suite à l'élément de connexion (3), et une butée (8.2) est prévue sur l'intérieur, sur l'élément extractible (1), eu égard à cette courbure,
et une contre-butée (8.1) est en outre prévue sur l'élément extractible (1), **caractérisé en ce que** l'élément extractible (1) est un élément extractible pivotant (1), **en ce que** sa capacité de mobilité entre la position installée et la position d'accès est une capacité de basculement,
et **en ce que** la contre-butée (8.1), lors du basculement de l'élément extractible pivotant (1) en position d'accès, facilite ou provoque une deuxième courbure du câble à fibres optiques (2) dans le sens contraire à ladite première courbure, laquelle deuxième courbure est située entre la première courbure et l'organe de guidage (4) et est conçue pour loger des longueurs de câbles excédentaires à la suite d'une augmentation de l'écart entre l'élément de connexion (3) et l'organe de guidage (4) du fait dudit basculement.

2. Module d'épissurage selon la revendication 1, dans lequel la butée (8.2), et de préférence également la contre-butée (8.1), présentent des surfaces arrondies de telle sorte que, lorsque le câble à fibres optiques (2) s'y appuie, il ne se produit aucun rayon de courbure de câble de moins de 30 mm.

3. Module d'épissurage selon l'une des revendications précédentes, dans lequel l'organe de guidage (4) restreint localement le câble à fibres optiques (2) transversalement à son sens longitudinal, de préférence à un maximum du triple de la somme des diamètres de tous les câbles à fibres optiques (2) introduits, sans toutefois fixer ledit câble à fibres optiques (2).

4. Module d'épissurage selon l'une des revendications précédentes, dans lequel l'organe de guidage (4) est fixe lors des mouvements de basculement de l'élément extractible pivotant (1) par rapport au support (6) ou couvre un maximum de 10 % de l'étendue de l'élément de connexion (3).

5. Module d'épissurage selon l'une des revendications précédentes, dans lequel la rangée d'éléments de connexion (3) comprend au moins douze éléments de connexion (3) et dans lequel, pour au moins les trois éléments de connexion (3) les plus proches de l'axe de pivotement (A) servant au mouvement de basculement et pour les câbles à fibres optiques (2) qui y sont associés, il est empêché une courbure plus intérieure du câble à fibres optiques (2) sur plus de 15°, lorsque l'élément extractible pivotant (1) est basculé en position d'accès.

6. Module d'épissurage selon l'une des revendications précédentes, dans lequel l'élément extractible pivotant (1) peut basculer d'au moins 90° et d'au plus 120°.

7. Module d'épissurage selon l'une des revendications précédentes, dans lequel une voie de guidage destinée au(x) câble(s) à fibres optiques (2) est définie sur l'élément extractible pivotant (1) entre deux parois dont l'une finit par former la butée (8.2) et l'autre la contre-butée (8.1) située sur le côté opposé du câble à fibres optiques (2).

8. Module d'épissurage selon l'une des revendications précédentes, comprenant un élément moulé de butée (8) présentant la butée (8.2) et la contre-butée (8.1), présentant de préférence en outre les parois délimitant la voie de guidage selon la revendication 7, et conçu symétrique de manière à pouvoir s'appliquer aussi bien aux modules d'épissurage dotés d'un axe de pivotement (A) situé sur une extrémité droite d'un bord avant de l'élément extractible pivotant (1) qu'aux modules d'épissurage dotés d'un axe de pivotement situé sur une extrémité gauche dudit bord avant.

9. Empilement de modules d'épissurage comprenant une pluralité de modules d'épissurage selon l'une des revendications précédentes, dont les axes de pivotement sont en concordance géométrique et qui sont mis en rangées ou en piles dans ce sens.

10. Armoire de distribution comprenant une pluralité de modules d'épissurage selon l'une des revendications précédentes 1-8, dont les axes de pivotement sont en concordance géométrique et qui sont mis en rangée ou en pile dans ce sens, comprenant de préférence une pluralité d'empilements selon la revendication 9.
